# EUROPÄISCHE PATENTSCHRIFT

(11) **EP 2 032 285 B1**
(45) Veröffentlichungstag und Bekanntmachung des Hinweises auf die Patenterteilung: **01.08.2012**
(21) Anmeldenummer: 07725464.7
(22) Anmeldetag: 23.05.2007
(51) Int. Cl.: B22D 11/12, B23Q 11/00, B23C 3/13

(54) **VORRICHTUNG ZUM HERSTELLEN EINES METALLBANDES DURCH STRANGGIESSEN**
DEVICE FOR PRODUCING A METAL STRIP BY CONTINUOUS CASTING
DISPOSITIF PERMETTANT DE PRODUIRE UNE BANDE MÉTALLIQUE PAR COULÉE CONTINUE

(30) Priorität: 26.05.2006 DE 102006024586; 14.05.2007 DE 102007022930
(43) Veröffentlichungstag der Anmeldung: 11.03.2009
(73) Patentinhaber: SMS Siemag AG, 40237 Düsseldorf (DE)
(72) Erfinder: SEIDEL, Jürgen, 57223 Kreuztal (DE); SUDAU, Peter, 57271 Hilchenbach (DE); MERZ, Jürgen, 57223 Kreuztal (DE); KIPPING, Matthias, 57562 Herdorf (DE)
(74) Vertreter: Klüppel, Walter
(86) Internationale Anmeldenummer: PCT/EP2007/004564
(87) Internationale Veröffentlichungsnummer: WO 2007/137741

(56) Entgegenhaltungen:
- EP-A1- 0 909 598
- EP-B1- 1 213 076
- JP-A- 9 122 712
- JP-A- 9 122 918

## Beschreibung

Die Erfindung betrifft eine Vorrichtung zum Herstellen eines Metallbandes durch Stranggießen, mit einer Gießmaschine, in der eine Bramme gegossen wird, wobei in Förderrichtung der Bramme hinter der Gießmaschine mindestens eine Fräsmaschine angeordnet ist, in der zumindest eine Oberfläche der Bramme, vorzugsweise zwei sich gegenüberliegende Oberflächen, abgefräst werden kann.

Beim kontinuierlichen Gießen von Brammen in einer Stranggussanlage können Oberflächenfehler, wie beispielsweise Oszillationsmarkierungen, Gießpulverfehler oder längs und quer verlaufende Oberflächenrisse, entstehen. Diese treten bei konventionellen und Dünnbrammen-Gießmaschinen auf. Je nach Einsatzzweck des Fertigbandes werden deshalb die konventionellen Brammen zum Teil geflämmt. Manche Brammen werden auf Kundenwunsch generell geflämmt. Die Ansprüche an die Oberflächenqualität von Dünnbrammenanlagen nehmen dabei kontinuierlich zu.

Für die Oberflächenbearbeitung bieten sich das Flämmen, Schleifen oder das Fräsen an.

Das Flämmen hat den Nachteil, dass das abgeschmolzene Material infolge des hohen Sauerstoffgehaltes nicht wieder ohne Aufbereitung eingeschmolzen werden kann. Beim Schleifen mischen sich Metallsplitter mit dem Schleifscheibenstaub, so dass der Abrieb entsorgt werden muss. Beide Verfahren sind schwierig an die gegebene Transportgeschwindigkeit anpassbar.

Es bietet sich deshalb eine Oberflächenbearbeitung durch Fräsen an. Die heißen Frässpäne werden dabei gesammelt und lassen sich paketieren und ohne Aufbereitung wieder problemlos einschmelzen und so dem Produktionsprozess wieder hinzufügen. Weiterhin kann die Fräserdrehzahl leicht auf die Transportgeschwindigkeit (Gießgeschwindigkeit, Fertigstraßen-Einzugsgeschwindigkeit) eingestellt werden. Die erfindungsgegenständliche Vorrichtung der eingangs genannten Art stellt daher auf das Fräsen ab.

Eine Vorrichtung der eingangs genannten Art mit einer Fräsmaschine, die hinter einer Stranggussanlage angeordnet ist, ist bekannt. Es wird hierzu auf die CH 584 085 und auf die DE 199 50 886 A1 verwiesen.

Eine ähnliche Einrichtung ist auch in der DE 71 11 221 U1 offenbart. Dieses Dokument zeigt die Bearbeitung von Aluminiumbändern unter Ausnutzung der Gießhitze, bei dem die Maschine mit der Gießanlage verbunden ist. Weitere ähnliche Lösungen zeigen die EP 0 909 598 A1, die JP 09 122918 A und die JP 09 122712 A.

Auch eine Inline-Abtragung von der Oberfläche einer Dünnbramme (Flämmen, Fräsen, etc.) kurz vor einer Walzstraße an Ober- und Unterseite oder nur einseitig wurde bereits vorgeschlagen, wozu auf die EP 1 093 866 A2 hingewiesen wird.

Eine weitere Ausgestaltung einer Oberflächenfräsmaschine zeigt die DE 197 17 200 A1. Hier wird u. a. die Veränderbarkeit der Fräskontur der Fräseinrichtung, die hinter der Stranggussanlage oder vor einer Walzstraße angeordnet ist, beschrieben.

Eine andere Anordnung einer Inline-Fräsmaschine in einer konventionellen Warmbandstraße zur Bearbeitung eines Vorbandes und deren Ausgestaltung schlagen die EP 0 790 093 B1, die EP 1 213 076 B1 und die EP 1 213 077 B1 vor.

Bei der Oberflächenbearbeitung der Dünnbrammen in einer sog. CSP-Anlage sollen in der Bearbeitungslinie ("inline") abhängig von den detektierten Oberflächenfehlern ein- oder beidseitig ca. 0,1 - 3,5 mm von der warmen Brammenoberfläche entfernt werden. Um die Ausbringung nicht zu stark zu mindern, ist eine möglichst dicke Dünnbramme empfehlenswert (H = 60 - 120 mm).

Die Oberflächenbearbeitung und die dazugehörigen Einrichtungen sind nicht auf Dünnbrammen beschränkt, sondern können auch hinter einer konventionellen Dickbrammengießanlage inline eingesetzt werden sowie bei Brammen, die mit einer Dicke von mehr als 120 mm bis zu 300 mm gegossen werden.

Die Inline-Fräsmaschine wird in der Regel nicht für alle Produkte eines Walzprogramms eingesetzt, sondern nur für die, bei denen höhere Oberflächenanforderungen gefordert werden. Dies ist aus Ausbringungsgründen vorteilhaft und vermindert die Fräsmaschinenabnutzung und ist deshalb sinnvoll.

Um eine gute Oberflächenqualität der Bramme nach dem Fräsen zu erhalten, ist es wichtig, dass der Fräsprozess, der zumeist sowohl auf der Oberseite als auch auf der Unterseite der Bramme durchgeführt wird, unter günstigen Prozessbedingungen stattfindet.

Das ist dann nicht mehr gegeben, wenn sich zu viele Späne im Bereich des bzw. der Fräser befinden. D. h., dass der Fräsvorgang insbesondere im Bereich der Oberseite der Bramme dann schwierig wird. Die hier abgetragenen Späne fliegen von dem Werkzeug weg und fallen auf die Bandoberfläche.

Aus der DE 101 49 573 A1 und aus der DE 603 00 800 T2 ist es daher bekannt geworden, zur Lösung dieses Problems so vorzugehen, dass die zu fräsenden Bänder umgelenkt werden und so jeweils die beiden Bandseiten von unten bearbeitet werden können. An der Unterseite entfernen sich die Späne durch die Schwerkraft quasi automatisch von der Bramme und können in einem Trichter leicht aufgefangen und wegtransportiert werden. Diese Möglichkeit besteht jedoch nicht bei Brammen mit relativ hoher Eigensteifigkeit. Um eingewalzte Partikel zu vermeiden, müssen die Späne und der Frässtaub restlos entfernt werden, was in diesem Falle Probleme bereitet.

Der vorliegenden Erfindung liegt daher die Aufgabe zugrunde, eine Vorrichtung zum Herstellen eines Metallbandes durch Stranggießen unter Einsatz einer Fräsmaschine so zu verbessern, dass eine optimale Brammenbearbeitung auch bei eigensteifen Brammen ermöglicht werden kann. Es soll dafür Sorge getragen werden, dass beim Fräsen der Bramme, vorzugsweise sowohl auf deren Oberseite als auch auf deren Unterseite, optimale Prozessbedingungen vorliegen und somit eine hohe Brammenqualität erzielbar ist.

Die Lösung dieser Aufgabe durch die Erfindung ist dadurch gekennzeichnet, dass im Bereich mindestens eines Fräsers der Fräsmaschine eine Spänefördervorrichtung angeordnet ist, die abgefräste Späne nach oben und/oder in Richtung quer zur Förderrichtung der Bramme aus dem Bereich des Fräsers weg fördert. Die Spänefördervorrichtung weist mindestens eine Förderschnecke auf, die im Bereich der Oberfläche der Bramme angeordnet ist und deren Längsachse quer zur Förderrichtung verläuft. Alternativ kann die Spänefördervorrichtung mindestens ein Förderband aufweisen, das im Bereich der Oberfläche der Bramme quer zur Förderrichtung läuft.

Damit wird die zu bearbeitende Bramme weitgehend frei von Spänen gehalten, was die Qualität der Oberflächenbearbeitung verbessert.

Für die Ausgestaltung der Spänefördervorrichtung stehen also verschiedene Möglichkeiten zur Verfügung.

Eine nicht beanspruchte Ausgestaltung sieht vor, dass die Spänefördervorrichtung mindestens ein - vorzugsweise gekühltes - Leitelement aufweist, das an seinem der Bramme zugewandten Ende in Richtung normal auf die Bramme betrachtet unter einem spitzen Winkel zur Richtung quer zur Förderrichtung verläuft. In diesem Falle erfolgt der Quertransport der Späne also durch die Relativbewegung zwischen der vorbeilaufenden Bramme und dem genannten Leitelement.

Dieser Spänequertransport bietet sich insbesondere an, wenn Gleichlauffräsen praktiziert wird und somit die Förderrichtung der Bramme und die Fräserdrehrichtung gleichgerichtet sind.

Wird hingegen vornehmlich ein Fräsen im Gegenlaufprinzip praktiziert, d. h. die Fräserdrehrichtung und die Förderrichtung der Bramme zeigen gegeneinander, kommen vorzugsweise auch andere alternative Lösungen zum Tragen. Alternativ kann dann vorgesehen werden, dass mit Hilfe von Längsabspritzungen und der Rotation des Fräsers die Späne auf ein geneigtes Leitelement geschleudert werden, auf dem die Späne mit einer Querabspritzung zur Seite gelenkt und seitlich aufgefangen werden.

Das Leitelement kann dabei eine Kante aus hitzebeständigem Material aufweisen, die gegen die Oberfläche der Bramme anlegbar ist. Das Leitelement kann ferner um eine horizontale Achse quer zur Förderrichtung der Bramme schwenkbar gelagert sein. Es kann weiterhin mit Kühlmitteln versehen sein oder in Verbindung stehen, mit denen es gekühlt werden kann. Diese Kühlmittel können als Spritzdüsen ausgebildet sein, die ein Kühlmedium auf das Leitelement spitzen können.

Eine weitere Ausgestaltung sieht vor, dass das Leitelement am Ende des Einströmkanals eine Mulde mit seitlichem Gefälle aufweist. Durch Längsabspritzungen auf die Bramme und vor allem innerhalb des Förderkanals werden die Späne von Wasser oder Pressluft mitgerissen und über das Leitelement und die Ablaufrinne wahlweise mit Unterstützung von Querabspritzungen innerhalb der Mulde abgeführt.

In einer weiteren bevorzugten Ausgestaltung besteht das Leitelement bzw. die Späneauffangvorrichtung aus einer "Wasserschnecke". In diese werden die Späne mit Hilfe von Wasserlängsabspritzungen hineinbefördert. Eine entsprechende Anstellung der Düsen erzeugt eine Querströmung des Wassers und damit der Späne, so dass ein Transport in Querrichtung innerhalb der Schnecke und letztlich ein Abtransport in den seitlichen Abflusskanal erfolgt. Das Aufbringen des Wassers auf das Leitelement kann dabei von einer Längsabspritzung direkt oder durch eine Umlenkung an einer Umlenkplatte oder direkten Umlenkung an der Düse erfolgen. Wichtig ist, dass eine Strömung auf das Leitelement erfolgt, so dass die Späne damit abtransportiert werden.

Eine alternative und bevorzugte Ausgestaltung der Erfindung sieht vor, dass die Spänefördervorrichtung mindestens ein Förderband aufweist, das im Bereich der Oberfläche der Bramme quer zur Förderrichtung läuft.

Bei der zuletzt genannten Lösung ist bevorzugt vorgesehen, dass das Förderband im Bereich der Oberfläche der Bramme horizontal verläuft. Das Förderband kann weiterhin als Endlosband ausgeführt sein und die Bramme in Förderrichtung betrachtet vollständig umschließen. In diesem Falle hat es sich bewährt, wenn das Förderband über eine Anzahl Umlenkrollen gelenkt wird, von denen mindestens eine angetrieben ist.

Das Förderband kann mit Kühlmitteln versehen sein oder in Verbindung stehen, mit denen es gekühlt werden kann. Die Kühlmittel sind bevorzugt als Spritzdüsen ausgebildet, die ein Kühlmedium auf das Förderband spritzen können.

Gemäß einer alternativen Ausgestaltung ist vorgesehen, dass die Spänefördervorrichtung mindestens eine Förderschnecke aufweist, die im Bereich der Oberfläche der Bramme angeordnet ist und deren Längsachse quer zur Förderrichtung verläuft. Durch Rotation der Schnecke wird ein Quertransport der Späne ermöglicht. Hierdurch wird analog ein Quertransport der Späne erzeugt.

Für die vorgenannten Ausgestaltungen der Erfindung gilt, dass in Förderrichtung vor oder hinter der Spänefördervorrichtung eine Prallplatte angeordnet sein kann. Diese Prallplatte kann mit einer Anzahl Leitlamellen versehen sein, die dem Fräser zugewandt sind.

Die Spänefördervorrichtung ist bevorzugt an Bewegungsmitteln angeordnet, mit denen sie in vertikale Richtung heb- und senkbar ist. Damit kann die Spänefördervorrichtung in optimaler Höhe in Bezug auf eine individuelle Bramme platziert werden.

Statt Verwendung eines Walzenfräsers ist alternativ insbesondere für die Brammenoberseite ein Stirnfräser einsetzbar. Durch Rotation des Fräsers um eine vertikale Achse entsteht automatisch eine Transportbewegung der Späne zur Seite hin ohne Einsatz von Leitelementen. Unterstützt wird der Quertransport durch Aktivierung von Schneidenkühlungen.

Auch an der Brammenunterseite kann ein Leitelement vorgesehen werden, mit dem die abgefrästen Späne auf ein Transportband geleitet werden.

In Förderrichtung hinter der Fräsmaschine kann eine Walzstraße angeordnet sein.

Eine Fortbildung sieht weiterhin vor, dass ein Leitkanal vorgesehen ist, über den die Späne von der Brammenoberseite unmittelbar hinter dem Frässpalt angesaugt werden, wobei die Späne in einem Rohr quer zur Förderrichtung weggefördert werden.

Schließlich kann auch noch vorgesehen werden, dass mindestens ein Magnet angeordnet ist, mit dem die Späne bei ihrer Wegförderung beeinflusst werden können.

Mit der vorgeschlagenen Lösung wird es möglich, ohne Verdrehung der Bramme, die deshalb beliebig eigensteif sein kann, eine optimale Fräsbearbeitung sicherzustellen, um eine hohe Oberflächenqualität zu erreichen. Dies führt zu einer qualitativ verbesserten Herstellung von Brammen, insbesondere von Dünnbrammen.

In der Zeichnung sind Ausführungsbeispiele der Erfindung dargestellt. Es zeigen:
- Fig. 1: schematisch die Seitenansicht einer Vorrichtung zum Herstellen eines Metallbandes durch Stranggießen, bei der eine Fräsmaschine zum Einsatz kommt,
- Fig. 2: in der Seitenansicht eine Spänefördervorrichtung für die Brammenoberseite mit einem Förderband, wobei der Bereich der Fräsmaschine im Vergleich mit Fig. 1 vergrößert dargestellt ist,
- Fig. 3: den Schnitt A-B gemäß Fig. 2,
- Fig. 4a: die Seitenansicht und
- Fig. 4b: die Draufsicht auf eine alternative Ausführungsform der Erfindung mit einem auf der Brammenoberseite angeordneten Leitelement für die Späne,
- Fig. 5: die Seitenansicht auf eine Ausführungsform der Erfindung mit einem auf der Brammenunterseite angeordneten Leitelement für die Späne und
- Fig. 6: eine Stützplatte für die Bramme, die im Bereich des Fräsers angeordnet ist,
- Fig. 7: die Seitenansicht eines Stirnfräsers für die Brammenoberseite,
- Fig. 8: die Draufsicht auf die Stirnfräseranordnung,
- Fig. 9: die Seitenansicht einer Späneauffangvorrichtung für die Brammenoberseite, die in Form einer "Wasserschnecke" ausgebildet ist, sowie eine Teildraufsicht hierzu,
- Fig. 10: die Seitenansicht einer weiteren alternativen Ausführungsform entsprechend Fig. 4 mit Mulde und Ablauf am Ende der Auffangvorrichtung,
- Fig. 11a: die Seitenansicht und
- Fig. 11b: die Draufsicht einer einfachen Spantransportvorrichtung zur Seite durch Bewegung der Bramme beim Gleichlauffräsen und
- Fig. 12: eine weitere alternative Ausgestaltung der Erfindung mit einer Absaugvorrichtung für Späne.

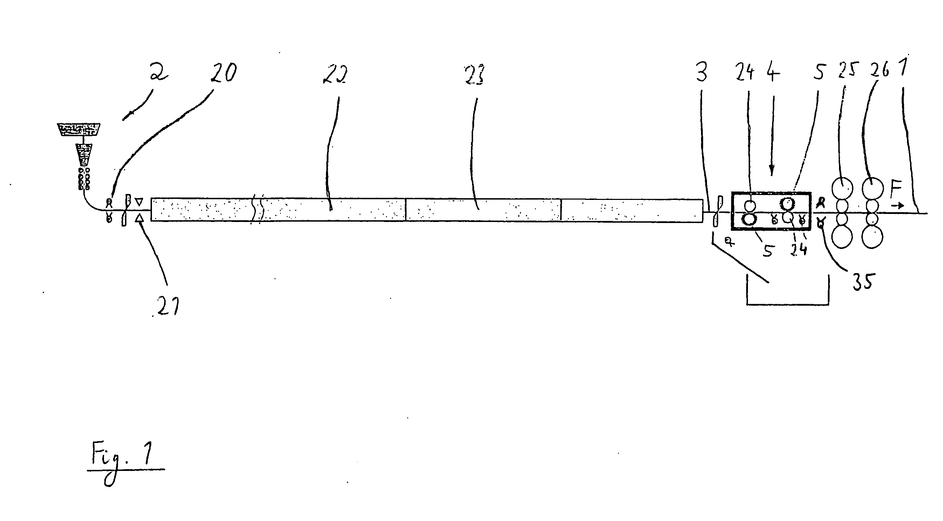

In Fig. 1 ist eine Vorrichtung zum Herstellen eines Metallbandes 1 durch Stranggießen dargestellt. Das Metallband 1 bzw. die entsprechende Bramme 3 wird in einer Gießmaschine 2 in bekannter Weise stranggegossen. Bei der Bramme 3 handelt es sich bevorzugt um eine Dünnbramme. Unmittelbar hinter der Gießmaschine 2 wird die Bramme 3 einer Brammenreinigung in einer Reinigungsanlage 20 unterzogen. Im Anschluss daran erfolgt eine Oberflächeninspektion mittels eines Oberflächenmessgeräts 21. Anschließend gelangt die Bramme 3 in einen Ofen 22, so dass sie auf einer gewünschten Prozesstemperatur gehalten werden kann. An den Ofen schließt sich eine Fähre 23 an.

Hinter dem Ofen 22 bzw. der Fähre 23 gelangt die Bramme 3 in eine Fräsmaschine 4. In dieser sind vorliegend - in Förderrichtung F etwas beabstandet - zwei Fräser 5 angeordnet, mit denen die untere bzw. die obere Oberfläche der Bramme 3 abgefräst werden kann. Die jeweilige gegenüberliegende Oberfläche der Bramme 3, d. h. die Oberseite bzw. die Unterseite derselben, wird von Stützrollen 24 abgestützt.

Hinter der Fräsmaschine 4 befindet sich eine Entzunderungseinrichtung 35 und eine Walzstraße, von der Walzgerüste 25 und 26 dargestellt sind.

Vorliegend geht es primär darum, die Brammenoberseite und -unterseite möglichst frei von Spänen zu halten, die beim Fräsprozess mit den Fräsern 5 entstehen. Werden die Späne nicht hinreichend aus dem Fräsbereich entfernt, kann es zu Oberflächenschädigungen der Bramme 3 kommen. Dies ist vorliegend insbesondere deshalb zu befürchten, weil die Bramme 3 so eigensteif ist, dass ein Verdrehen um die Längsachse nicht in Frage kommt, um den Fräsprozess stets nur an der Unterseite der Bramme vornehmen zu können.

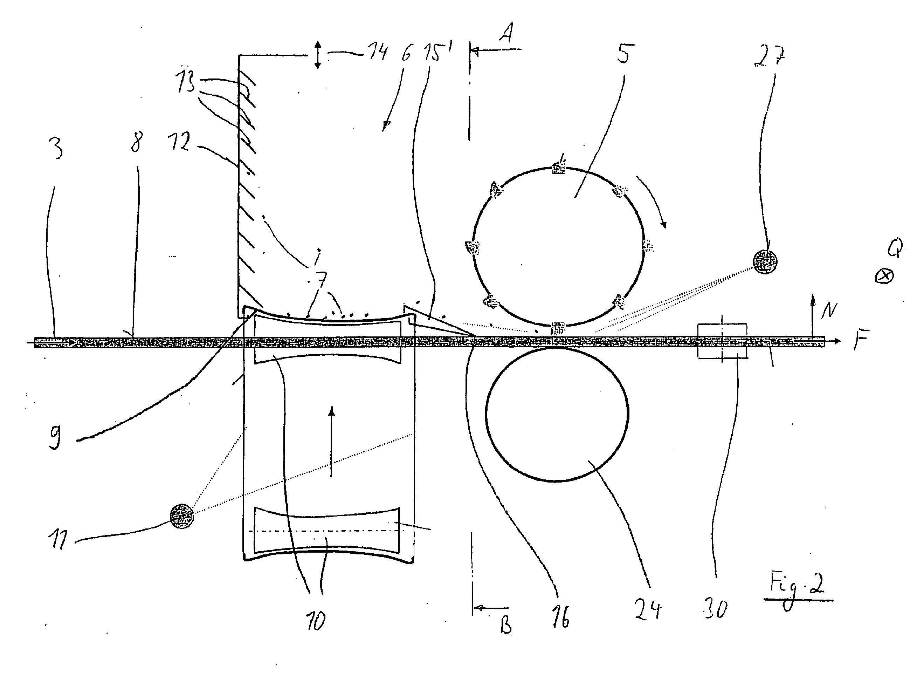

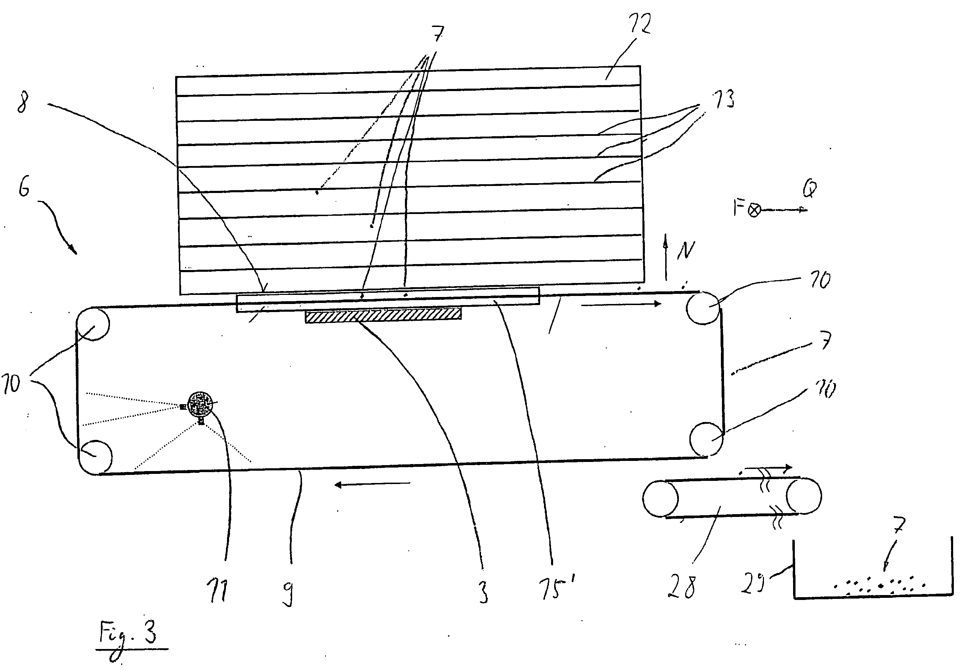

Eine mögliche Ausgestaltung der Erfindung zur Lösung des Problems ist in den Figuren 2 und 3 skizziert.

Wie in Fig. 2 gesehen werden kann, fräst der Fräser 5 die obere Oberfläche 8 der Bramme 3 ab. Von unten wird die Bramme 3 von einer Stützrolle 24 unterstützt. Wie es in Fig. 2 angedeutet ist, fliegen aufgrund des Fräsprozesses Späne 7 aufgrund der Drehrichtung des Fräsers 5 (s. Pfeil) in Fig. 2 nach links weg. Es besteht die Gefahr, dass auf der Brammenoberfläche verbleibende Späne 7 den Fräsprozess stören und die Qualität der Bearbeitung negativ beeinflussen.

Deshalb ist eine Spänefördervorrichtung 6 vorgesehen, die die Späne 7 zuverlässig entfernen soll. Die Spänefördervorrichtung 6 weist als zentrales Bauteil ein Förderband 9 auf, wie es aus der Zusammenschau der Figuren 2 und 3 gut ersichtlich ist. Das endlos ausgeführte Förderband 9 umfasst, s. hierzu Fig. 3, die Bramme 3 vollständig. In ihrem oberen Bereich verläuft das Förderband 9 knapp oberhalb der Oberfläche 8 der Bramme 3.

Das Förderband 9 wird durch vier Umlenkrollen 10 geführt, von denen mindestens eine angetrieben ist. Das Band selber besteht aus hitzestabilem Material, da es in Kontakt mit der heißen Bramme kommt bzw. knapp über ihr verläuft. Dabei ist es vorteilhaft, wenn das Förderband 9 gekühlt wird, wozu im Ausführungsbeispiel Kühlmittel 11 in Form einer Spritzdüse vorgesehen sind. Mit der Düse 11 kann ein Kühlmedium (Wasser) auf das Förderband 9 gespritzt werden, um es nicht zu heiß werden zu lassen.

Damit die Späne 7 nicht zu weit vom Fräser 5 weggeschleudert werden, ist hinter dem Förderband 9 eine Prallplatte 12 angeordnet, die flächig ausgebildet ist und sich vertikal erstreckt.

Damit auf die Prallplatte 12 auftreffend Späne 7 optimal auf das Förderband 9 geführt werden, sind auf der dem Fräser 5 zugewandten Seite der Prallplatte 12 Leitlamellen 13 angeordnet.

Das Förderband 9 soll mit seinem oberen horizontal verlaufenden Abschnitt möglichst knapp über der Oberfläche 8 der Bramme 3 verlaufen. Damit dies in Abhängigkeit von der konkret zu bearbeitenden Bramme genau eingestellt werden kann, sind nur schematisch dargestellte Bewegungsmittel 14 vorgesehen, mit denen die gesamte Spänefördervorrichtung 6 in vertikale Richtung verstellt werden kann.

Um das Entfernen von Spänen von der Oberfläche 8 der Bramme 3 optimal zu unterstützen, ist im Ausführungsbeispiel weiterhin ein Leitelement 15' vorgesehen (das hier in Verbindung mit dem Förderband 9 eingesetzt wird), das auch als Abstreifer angesprochen werden kann. Das Leitelement 15' hat in seinem der Bramme 3 zugewandten Endbereich eine Kante 16 aus besonders hitzestabilem Material. Diese Kante liegt im Betrieb entweder auf der Brammenoberfläche auf oder wird dicht über der Oberfläche schwebend gehalten.

In den Figuren 2 und 3 ist noch zu erkennen, dass hinter dem Fräser 5 ein Düsenbalken 27 bestehend aus mehreren Düsen angeordnet ist (s. Fig. 2). Mit diesen Düsen kann das Bewegen der Späne auf das Förderband 9 zu mittels eines Wasser- oder Druckluftstrahls unterstützt werden. Durch die Düse kann also flüssiges oder gasförmige Medium ausgebracht werden (Wasser oder Druckluft), das im Übrigen auch eine erwünschte Kühlwirkung hat.

In Fig. 3 ist zu sehen, dass das Förderband 9 die Späne 7 auf ein zweites Förderband 28 fördert, von wo aus die Späne 7 weiter in einen Auffangbehälter 29 transportiert werden.

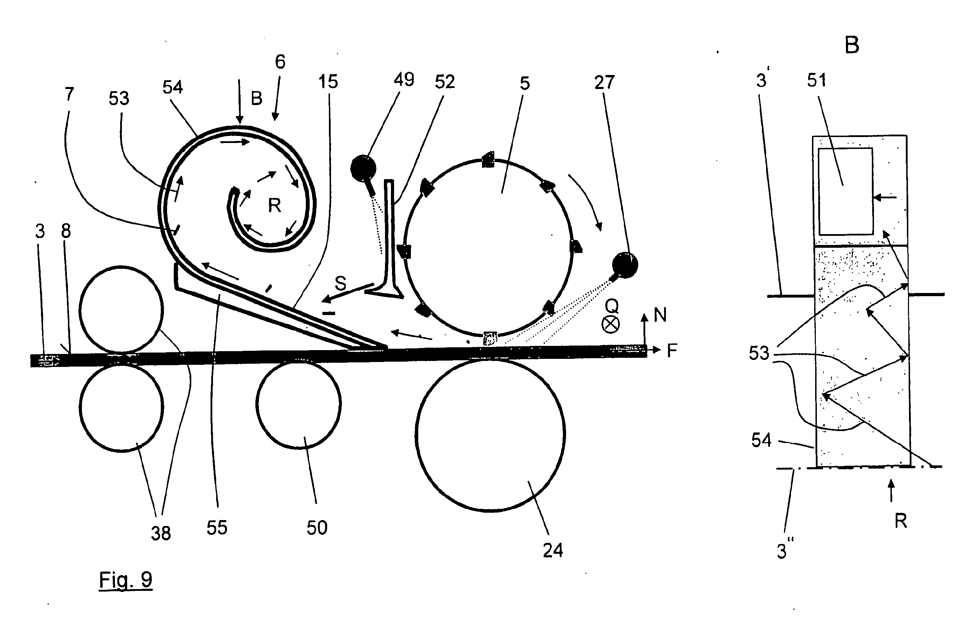

Eine weitere wichtige Ausgestaltung der Erfindung ist in der Seitenansicht und in der Teildraufsicht in Fig. 9 gezeigt. Fig. 9 stellt eine alternative Spänefördervorrichtung 6 für die Brammenoberseite dar. Mit Hilfe eines Wasserstrahls S, der über einen Düsenbalken 49 aufgebracht wird, werden die Frässpäne in eine sogenannte Wasserschnecke 54 befördert. Dabei kann das Wasser aus dem Düsenbalken 49 auf eine Umlenkplatte 52 spritzen, sich dort ausbreiten und in Richtung S gegen das Leitelement 15 fließen.

Alternativ ist auch ein direktes Sprühen vom Bereich der Umlenkplatte oder eine direkte Umlenkung an die Düse in die gewünschte Richtung S denkbar.

Ziel ist es, dass die Späne vom Wasserstrahl aufgenommen und mitgerissen werden. Es bietet sich an, einen Druck von größer als 50 bar einzusetzen. Der Wasserstrahl S ist nicht exakt gegen die Förderrichtung F gerichtet, sondern hat auch eine Komponente in Querrichtung, also zur Brammenkante hin. Dies wird erreicht durch eine entsprechende Anstellung bzw. Verdrehung der Düse. Dabei kann die Anstellung symmetrisch ausgerichtet sein, so dass das Wasser nach beiden Seiten innerhalb der Fördereinrichtung 6 zur Seite fließt oder die Anstellung ist nur nach einer Seite (= Abfließseite) ausgerichtet.

Durch die spiralförmige oder schneckenförmige Ausbildung des Förderkanals 54 und der schräg angestellten Spritzrichtung 53 entsteht im Bereich R ein rohrförmiger Wasserstrudel. Wie in dem Bildausschnitt rechts in Fig. 9, der die Blickrichtung B gemäß der linken Darstellung in Fig. 9 zeigt, zu erkennen ist, fließt durch die hohe Fließgeschwindigkeit und die schräg gerichtete Wasserzufuhr das Wasser 53 mit den Spänen spiralförmig zu dem außenliegenden Abflusskanal 51. Der Abflusskanal 51 kann dabei auf der Antriebs- und/oder Bedienungsseite neben der Brammenkante 3' angeordnet sein.

Zusätzlich kann auch eine Querabspritzung im Bereich R, also innerhalb der Spänefördervorrichtung 6 die Spanabfuhr unterstützen. Späne, die zwischen Leitblech 15 und Fräser 5 auf der Brammenoberseite liegen bleiben, werden durch den Düsenbalken (Längsabspritzung) 27 auf das Leitblech befördert. Die Spänefördervorrichtung 6 liegt an der Spitze auf der Bramme auf bzw. schwebt dicht über der Brammenoberfläche. Das Leitelement 15 ist zwecks Wärmeschutzes innengekühlt oder zur Bramme 3 hin wärmeisoliert. Besonders vorteilhaft ist, dass trotz Wassereinsatzes über den Düsenbalken 49 für den Transport der Späne die Bramme 3 kaum gekühlt wird.

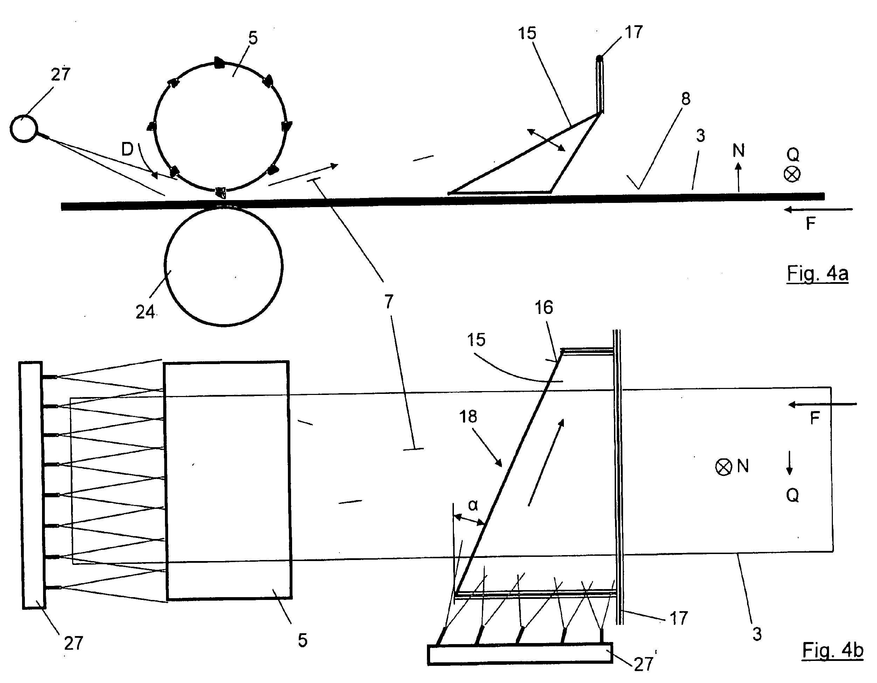

In den Figuren 4a und 4b ist in zwei verschiedenen Ansichten eine weitere alternative Ausgestaltung der Erfindung dargestellt. Es sei bemerkt, dass das dort dargestellte Leitelement 15 isoliert als Spänefördervorrichtung 6 eingesetzt werden kann oder auch in Kombination mit einem Förderband gemäß Fig. 2 und 3 (dann bezeichnet als Leitelement 15').

In den Figuren 4a und 4b ist das Leitelement 15 zum Ableiten von Spänen 7 an der Oberseite der Bramme 3 vorgesehen und ausgebildet. Das Leitelement 15 ist als Blech ausgeformt, das am einen Ende 18 mit einer Kante 16 aus wärmestabilem Material versehen ist. Diese Kante 16 verläuft - in Normalenrichtung N auf die Bramme 3 betrachtet (s. Fig. 4b) - unter einem spitzen Winkel α zur Richtung Q quer zur Förderrichtung F. Der Winkel liegt bevorzugt zwischen 10° und 45°. Die Auftrefffläche ist zusätzlich zur Seite geneigt.

Hierdurch wird infolge der Bewegung bzw. Flugrichtung der Späne gegen die Platte 15 eine Querbewegung in Richtung Q erzeugt, so dass die Späne 7 zur Seite weggeschleudert werden. Seitlich neben der Bramme 3 können die Späne nach unten fallen, entweder direkt in einen Auffangbehälter oder auf ein Förderband analog zu der Lösung gemäß der Figuren 2 und 3.

Das Leitelement 15 ist um eine horizontale Achse 17, die in Richtung Q quer zur Förderrichtung F verläuft, gelagert. Damit kann - durch nicht dargestellte Bewegungsmittel (s. Doppelpfeil in Fig. 4a) - das Leitelement 15 so positioniert werden, dass die Kante 16 entweder auf der Brammenoberseite aufliegt oder knapp darüber schwebend gehalten wird.

Das Leitelement 15 kann durch geeignete Mittel gekühlt werden. Dabei ist es nicht nur möglich, dass eine Kühlung mittels Spritzdüsen von außen erfolgt, denkbar ist es gleichermaßen, dass eine Innenkühlung durch entsprechende Kühlkanäle im Leitelement 15 erfolgt.

Neben der dargestellten Ausbildung als winkelig verlaufende Kante 16 über die gesamte Breite der Bramme 3 ist auch eine pflugartige Ausgestaltung mit zwei gegensinnig unter dem Winkel α angeordneten Kantenteilen möglich.

Die Seitwärtsbewegung der Späne 7 kann auch durch Hilfsmittel unterstützt werden. In Frage kommt hierfür z. B. ein Gebläse für Luft oder ein Wasserstrahl, mit denen die Späne 7 seitlich abgelenkt werden können. Es sind Düsenbalken (Hochdruckwasser- oder Druckluftdüsen) 27, 27', die in Förderrichtung hinter dem Fräser 5 oder an der Seite untergebracht sind, denkbar.

Das Leitelement 15 kann in allen dargestellten Fällen aus einem Teil bestehen. Es kann auch vorgesehen sein, dass es über der Brammenbreite aus mehreren einzelnen Segmenten besteht. Er kann durch sein Eigengewicht auf der Bramme 3 aufliegen. Er kann auch durch Federelemente gegen die Brammenoberseite gedrückt werden. Wie schon erwähnt, kann auch vorgesehen sein, dass die Kante 16 des Leitelements 15 schwebend knapp über der Brammenoberseite positioniert wird.

Auch durch den Fräsprozess selbst infolge der schräg angeordneten Schneiden des Fräsers 5 kann der Spänetransport in Querrichtung Q begünstigt werden.

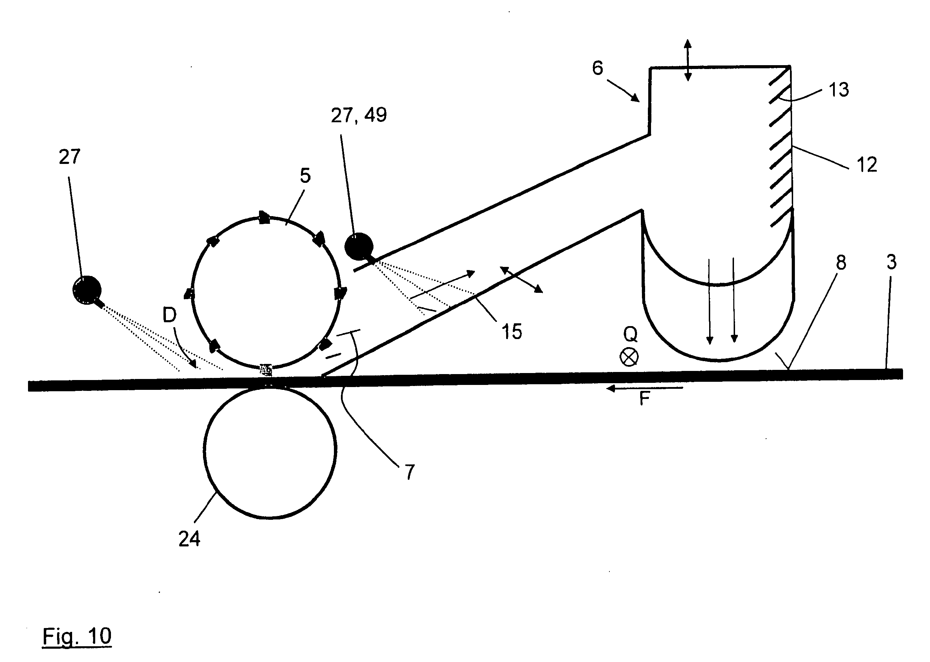

Ähnlich wie in den zuvor erläuterten Alternativen werden bei der Lösung gemäß Fig. 10 die Späne mit den Düsenbalken (Förderstrahl) 27, 49 über ein Leitelement 15 in die Spänefördervorrichtung 6 bewegt. Am Ende der Vorrichtung 6 ist hier alternativ eine Ablaufrinne vorgesehen, in die die Späne zur Seite gleiten bzw. gespült werden.

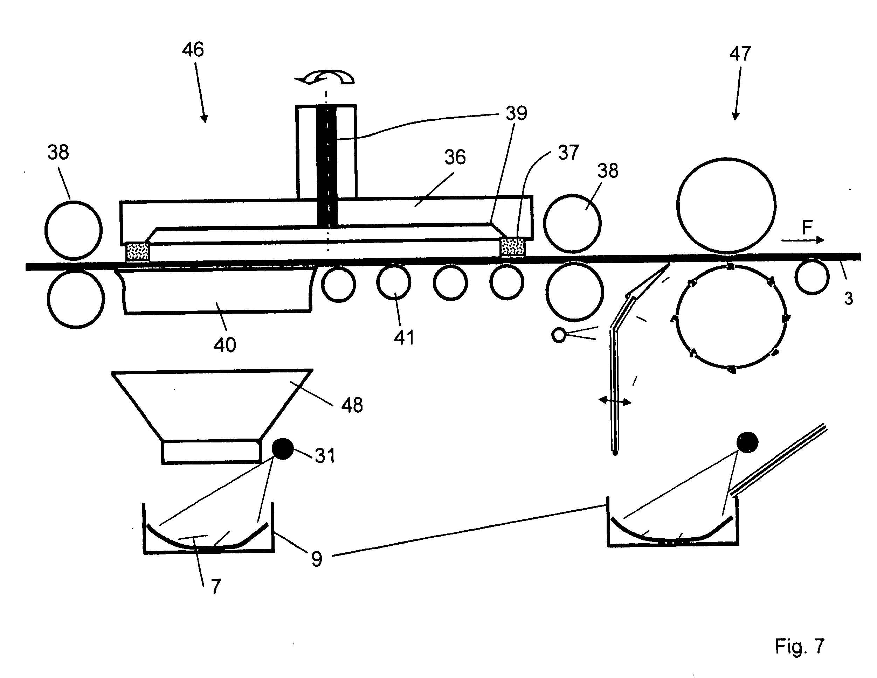

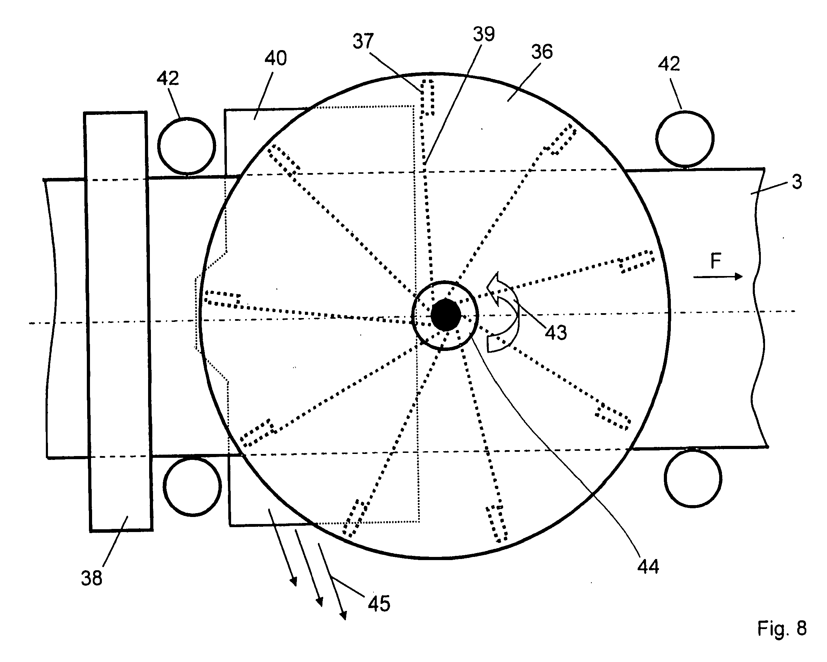

Um die Späneabfuhr auf der Brammenoberseite zu begünstigen, ist bei der Lösung gemäß den Figuren 7 und 8 statt des bereits beschriebenen Walzenfräsers 5 ein Stirnfräser 36 vorgesehen. Der Fräser 36 ist oberhalb der Bramme 3 angeordnet. In dem scheibenförmigen Grundkörper sind auf der Unterseite im äußeren Bereich Schneiden 37 befestigt. Der Stirnfräser 36 ist im Durchmesser etwas größer als die maximale Brammenbreite ausgeführt. Der Spänetransport zur Seite 45 erfolgt durch die Drehung des Fräsers 36. Seitlich neben dem Band werden die Späne in einem Trichter 48 aufgesammelt und wegtransportiert.

Damit im Schnittbereich des Fräsers 36 die Bramme 3 stabil aufliegt, ist ein innengekühlter Überleittisch 40 vorgesehen. Der Vorschub der Bramme 3 wird durch Treiber 38 sichergestellt. Die Kühlung des Stirnfräsers 36 und der Schneiden wird durch eine Schneidenkühlung 39 sichergestellt. Über eine Drehkupplung bzw. Antriebswelle 44 wird Wasser oder Emulsion dem Fräsergrundkörper zugeführt. Hierin ist in radialer Richtung von der Mitte zur Schneide hin eine Schneidenkühlung (Kühlbohrungen) 39 eingebracht, die den Fräser 36 optimal kühlt und den Spantransport zur Seite begünstigt. Durch Rollenseitenführungen 42 werden die Querkräfte (Axialkräfte) aufgenommen, die sich aufgrund der unter Winkel angeordneten Fräserschneiden beim Fräsen ergeben. Die Seitenansicht auf den Treiber und den Stirnfräser auf der Oberseite der Bramme 3 stellt Fig. 7 dar. Fig. 8 zeigt die Draufsicht auf die Bramme 3 und den Stirnfräser 36 sowie die Rollenseitenführungen 42.

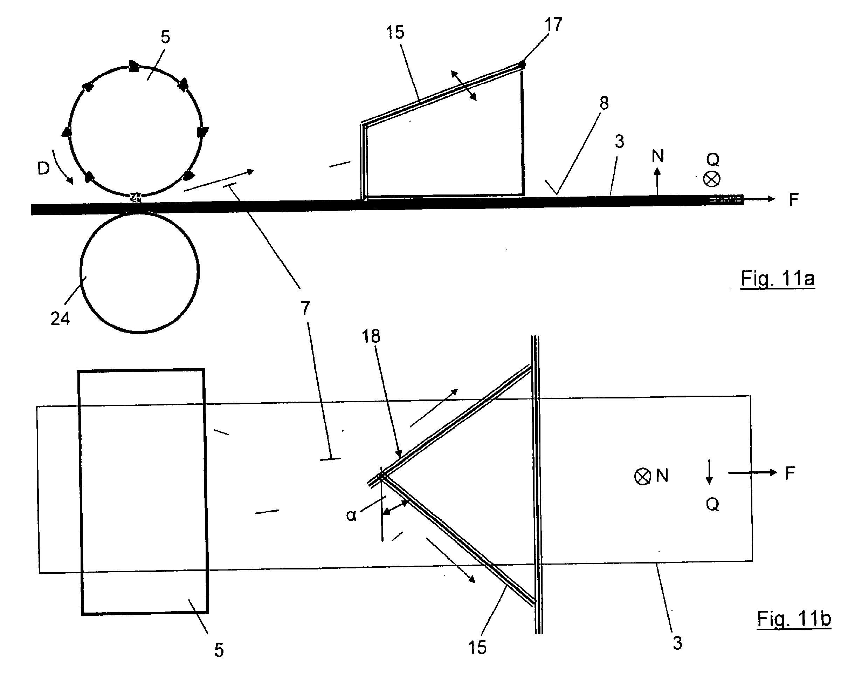

In den Figuren 11 a und 11b ist dargestellt, wie das Leitelement 15 auf der Brammenoberfläche aufliegt. Bei Gleichlauffräsen erfolgt so ein einfacher Spänetransport in Seitenrichtung durch Anstellung α der Seitenflächen des Leitelements 15. Durch die Relativbewegung zwischen der vorbeilaufenden Bramme 3 und dem genannten Leitelement 15 bewegen sich die Späne 7 zur Seite und werden - wie bereits erläutert - weitertransportiert. Dieser Mechanismus funktioniert dann, wenn die Fräserdrehrichtung und die Brammenförderrichtung F die gleiche Richtung haben.

Weiterhin kann bei allen Ausführungsformen vorgesehen werden, dass Rollenseitenführungen 30 angeordnet werden (s. Fig. 2), die die Bramme 3 mittig in der Linie halten. Die Rollenseitenführungen 30 können sowohl vor als auch hinter der Fräsmaschine 4 bzw. den Fräsern 5 angeordnet sein.

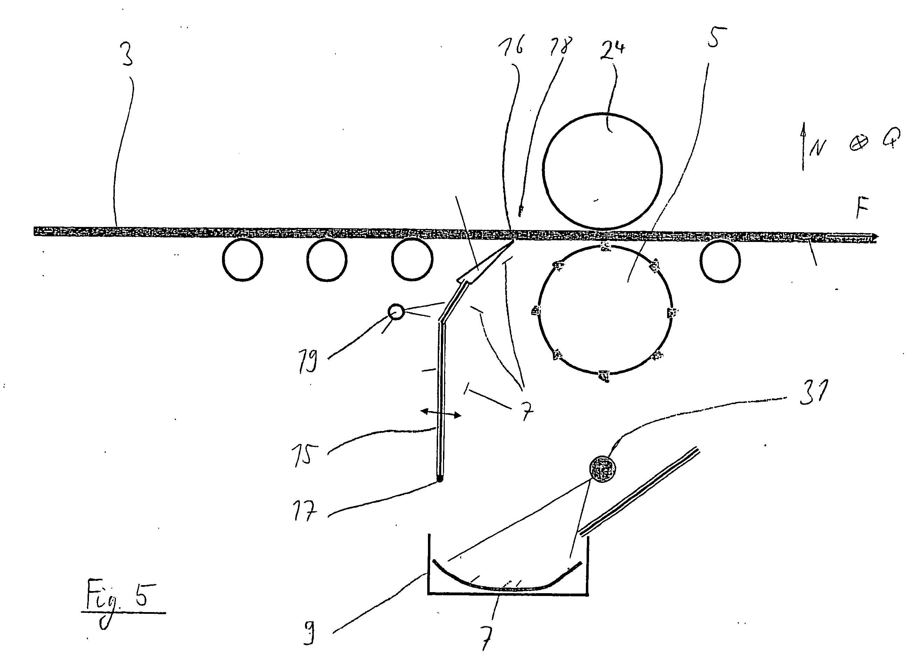

In Fig. 5 ist ein Leitelement 15 für die Unterseite der Bramme 3 dargestellt. Es sei bemerkt, dass die Abfuhr der Späne 7 aufgrund der Schwerkraft hier natürlich sehr viel einfacher ist als auf der Brammenoberseite. Dennoch ist auch hier ein Leitelement 15 vorgesehen, dass um eine horizontale Querachse 17 schwenkbar ist. Es gelten ansonsten die Ausführungen im Zusammenhang mit Fig. 4 analog.

Die Kühlung des Leitelements 15 erfolgt durch Kühlmittel 19 (Spritzdüsen für Wasser oder Düsen für Luft). Unterhalb des Leitelements 15 ist ein Förderband 9 vorgesehen. Die auf diesem transportierten Späne 7 können mittels eines Kühlmittels 31 (Spritzdüse) gekühlt werden.

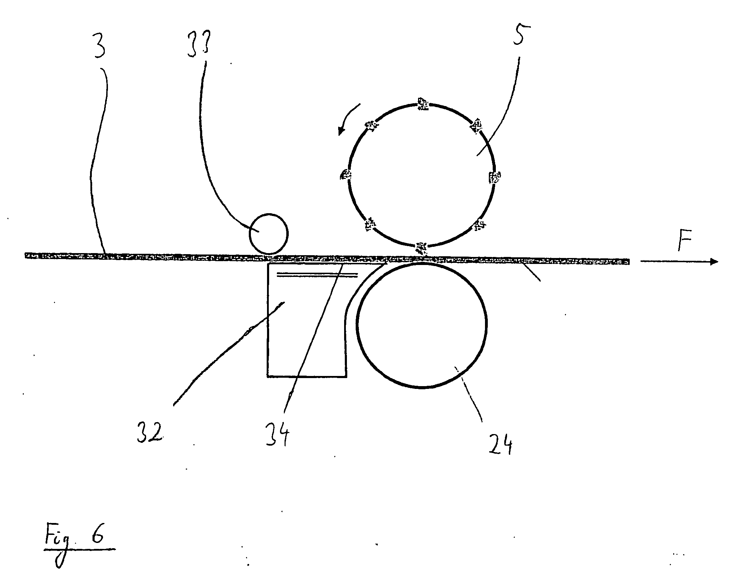

In Fig. 6 ist noch ein Detail zu sehen, das die Prozesssicherheit der Anordnung unterstützt. Unterhalb der Bramme 3 ist eine Stützplatte 32 angeordnet, die innengekühlt und heb- und senkbar ausgeführt sein kann. Auf der Gegenseite der Bramme 3 ist eine bewegliche Anpressrolle 33 zur Erzeugung einer geringen Anpresskraft angeordnet. Die Oberfläche 34 der Stützplatte 32 kann rillenförmig ausgebildet sein, um die Kontaktfläche gering zu halten. Mit der in Fig. 6 dargestellten Einrichtung kann ein optimales Einfädeln der Bramme in den Bearbeitungsspalt zwischen Fräser 5 und Stützrolle 24 erfolgen.

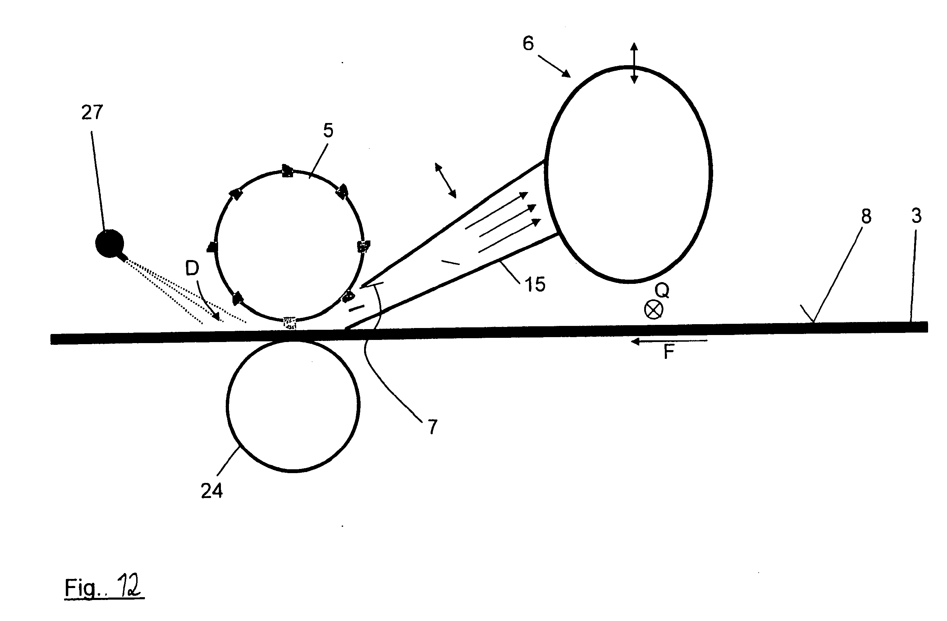

Eine weitere alternative Ausgestaltung des Erfindungsgedankens, die Späne von der Brammenoberseite zu entfernen, ist durch Absaugen möglich. Dies ist in Fig. 12 illustriert. Hierzu ist unmittelbar hinter dem Frässpalt ein Leitkanal bestehend aus mehreren Leitblechen 15 angeordnet. Die Späne, die in den Kanal fliegen, werden also zusätzlich angesaugt und in einem Rohr quer wegbefördert. Das Rohr und der Ansaugkanal sind zur Bramme hin thermisch isoliert. Weiterhin sind zur Geräuschdämmung der Kanal und das Rohr von außen mit Dämmmatten verkleidet.

Zur Unterstützung des Spänetransports zur Seite oder zur Richtungsgebung der Späne sind Permanent- oder Elektromagnete einsetzbar (nicht dargestellt). Die Späne kühlen sehr schnell unter die Umwandlungstemperatur ab, so dass sie mit Magneten beeinflussbar sind.

### Bezugszeichenliste:

- 1: Metallband
- 2: Gießmaschine
- 3: Bramme
- 3': Brammenkante
- 3": Brammenmittellinie bzw. Maschinenmitte
- 4: Fräsmaschine
- 5: Fräser
- 6: Spänefördervorrichtung
- 7: Späne
- 8: Oberfläche der Bramme
- 9: Förderband
- 10: Umlenkrolle
- 11: Kühlmittel (Spritzdüse)
- 12: Prallplatte
- 13: Leitlamellen
- 14: Bewegungsmittel
- 15: Leitelement
- 15': Leitelement
- 16: Kante
- 17: Achse
- 18: Ende des Leitelements
- 19: Kühlmittel
- 20: Reinigungsanlage
- 21: Oberflächenmessgerät
- 22: Ofen
- 23: Fähre
- 24: Stützrolle
- 25: Walzgerüst
- 26: Walzgerüst
- 27: Düsenbalken als Längsabspritzung
- 27': Düsenbalken als Querabspritzung
- 28: zweites Förderband
- 29: Auffangbehälter
- 30: Rollenseitenführung
- 31: Kühlmittel
- 32: Stützplatte
- 33: Anpressrolle
- 34: Oberfläche
- 35: Zunderwäscher
- 36: Stirnfräser
- 37: Schneide
- 38: Treiber
- 39: Schneidenkühlung, Fräserkühlung
- 40: Überleittisch
- 41: Rollgangsrolle
- 42: Rollenseitenführung
- 43: - nicht vergeben -
- 44: Drehkupplung, Antriebswelle
- 45: Spänetransport zur Seite
- 46: Fräsen der Oberseite
- 47: Fräsen der Unterseite
- 48: Späne-Auffangtrichter
- 49: Düsenbalken zum Spantransport
- 50: Rollgangsrolle
- 51: Abflusskanal
- 52: Umlenkplatte bzw. winkel
- 53: Strömungsrichtung des Wassers in der Wasserschnecke
- 54: Wasserschnecke, Späneauffangvorrichtung
- 55: Wärmedämmung bzw. Kühlung
- F: Förderrichtung
- D: Drehrichtung des Walzenfräsers
- Q: Querrichtung
- N: Normalenrichtung
- α: Winkel
- S: Sprührichtung
- R: Bereich mit rohrförmigem Wasserstrudel

## Patentansprüche

1. Vorrichtung zum Herstellen eines Metallbandes (1) durch Stranggießen, mit einer Gießmaschine (2), in der eine Bramme (3) gegossen wird, wobei in Förderrichtung (F) der Bramme (3) hinter der Gießmaschine (2) mindestens eine Fräsmaschine (4) angeordnet ist, in der zumindest eine Oberfläche der Bramme (3) abgefräst werden kann,
**dadurch gekennzeichnet,**
**dass** im Bereich mindestens eines Fräsers (5) der Fräsmaschine (4) eine Spänefördervorrichtung (6) angeordnet ist, die abgefräste Späne (7) nach oben und/oder in Richtung (Q) quer zur Förderrichtung (F) der Bramme (3) aus dem Bereich des Fräsers (5) weg fördert,
wobei die Spänefördervorrichtung (6) mindestens eine Förderschnecke aufweist, die im Bereich der Oberfläche (8) der Bramme (3) angeordnet ist und deren Längsachse quer zur Förderrichtung (F) verläuft, oder
wobei die Spänefördervorrichtung (6) mindestens ein Förderband (9) aufweist, das im Bereich der Oberfläche (8) der Bramme (3) quer zur Förderrichtung (F) läuft.

2. Vorrichtung nach Anspruch 1,
**dadurch gekennzeichnet,**
**dass** das Förderband (9) im Bereich der Oberfläche (8) der Bramme (3) horizontal verläuft.

3. Vorrichtung nach Anspruch 1 oder 2,
**dadurch gekennzeichnet,**
**dass** das Förderband (9) als Endlosband ausgeführt ist und die Bramme (3) in Förderrichtung (F) betrachtet vollständig umschließt.

4. Vorrichtung nach Anspruch 3,
**dadurch gekennzeichnet,**
**dass** das Förderband (9) über eine Anzahl Umlenkrollen (10) gelenkt wird, von denen mindestens eine angetrieben ist.

5. Vorrichtung nach einem der Ansprüche 1 bis 4,
**dadurch gekennzeichnet,**
**dass** das Förderband (9) mit Kühlmitteln (11) versehen ist oder in Verbindung steht, mit denen es gekühlt werden kann.

6. Vorrichtung nach Anspruch 5,
**dadurch gekennzeichnet,**
**dass** die Kühlmittel (11) als Spritzdüsen ausgebildet sind, die ein Kühlmedium auf das Förderband (9) spritzen können.

7. Vorrichtung nach einem der Ansprüche 1 bis 6,
**dadurch gekennzeichnet,**
**dass** in Förderrichtung (F) vor oder hinter der Spänefördervorrichtung (6) eine Prallplatte (12) angeordnet ist.

8. Vorrichtung nach Anspruch 7,
**dadurch gekennzeichnet,**
**dass** die Prallplatte (12) mit einer Anzahl Leitlamellen (13) versehen ist, die dem Fräser (5) zugewandt sind.

9. Vorrichtung nach einem der Ansprüche 1 bis 8,
**dadurch gekennzeichnet,**
**dass** die Spänefördervorrichtung (6) an Bewegungsmitteln (14) angeordnet ist, mit denen sie in vertikale Richtung heb- und senkbar und/oder schwenkbar ist.

10. Vorrichtung nach einem der Ansprüche 1 bis 9,
**dadurch gekennzeichnet,**
**dass** ein Leitelement (15') angeordnet ist, mit denen Späne (7) von der Oberfläche (8) der Bramme (3) auf die Spänefördervorrichtung (6) geleitet werden können.

11. Vorrichtung nach Anspruch 10,
**dadurch gekennzeichnet,**
**dass** das Leitelement (15') eine Kante (16) aus hitzebeständigem Material aufweist, die gegen die Oberfläche (8) der Bramme (3) anlegbar ist.

12. Vorrichtung nach Anspruch 10 oder 11,
**dadurch gekennzeichnet,**
**dass** das Leitelement (15') um eine horizontale Achse (17) quer zur Förderrichtung (F) der Bramme (3) schwenkbar gelagert ist.

13. Vorrichtung nach einem der Ansprüche 10 bis 12,
**dadurch gekennzeichnet,**
**dass** das Leitelement (15') mit Kühlmitteln (19) versehen ist oder in Verbindung steht, mit denen es gekühlt werden kann.

14. Vorrichtung nach Anspruch 13,
**dadurch gekennzeichnet,**
**dass** die Kühlmittel (19) als Spritzdüsen ausgebildet sind, die ein Kühlmedium auf das Leitelement (15') spritzen können.

15. Vorrichtung nach einem der Ansprüche 1 bis 14,
**dadurch gekennzeichnet,**
**dass** weiterhin Hochdruckwasser- oder Druckluftdüsen (27, 49) angeordnet sind, die den Spänetransport unterstützen.

16. Vorrichtung nach Anspruch 15,
**dadurch gekennzeichnet,**
**dass** die Hochdruckwasser- oder Druckluftdüsen (27, 49) Späne auf das Förderband (9) oder zu dem Leitelement (15') oder zu einem schneckenförmig ausgebildeten Aufnahmeelement (54) fördern.

17. Vorrichtung nach einem der Ansprüche 1 bis 16,
**dadurch gekennzeichnet,**
**dass** Rollenseitenführungen (30) zur Aufnahme von auf den Fräser (5) wirkenden Axialkräften vorgesehen sind.

18. Vorrichtung nach einem der Ansprüche 1 bis 17,
**dadurch gekennzeichnet,**
**dass** zumindest der für die Brammenoberseite zum Einsatz kommende Fräser (5) ein Stirnfräser (36) ist.

19. Vorrichtung nach Anspruch 18,
**dadurch gekennzeichnet,**
**dass** mehrere Stirnfräser (36) vorgesehen sind, die in Förderrichtung (F) betrachtet mit Überdeckung angeordnet sind.

20. Vorrichtung nach Anspruch 18 oder 19,
**dadurch gekennzeichnet,**
**dass** der Stirnfräser (36) eine Anzahl Schneiden (37) aufweist, die durch eine Schneidenkühlung (39) kühlbar sind.

21. Vorrichtung nach einem der Ansprüche 1 bis 20,
**dadurch gekennzeichnet,**
**dass** ein Überleittisch (40) vorgesehen ist, der zur Auflage der Bramme (3) im Bereich des oder der Fräser (5) ausgebildet ist.

22. Vorrichtung nach Anspruch 21,
**dadurch gekennzeichnet,**
**dass** der Überleittisch (40) innengekühlt ausgebildet ist.

23. Vorrichtung nach einem der Ansprüche 1 bis 22,
**dadurch gekennzeichnet,**
**dass** die Spänefördervorrichtung (6) als schneckenförmig ausgebildetes Aufnahmeelement (54) ausgebildet ist.

24. Vorrichtung nach Anspruch 23,
**dadurch gekennzeichnet,**
**dass** ein Leitelement (15) vorgesehen ist, das zum Fördern von Spänen von der Brammenoberseite in das schneckenförmig ausgebildete Aufnahmeelement (54) ausgebildet ist.

25. Vorrichtung nach Anspruch 23 oder 24,
**dadurch gekennzeichnet,**
**dass** eine Umlenkplatte (52) vorgesehen ist, wobei die Umlenkplatte (52) mit einem aus einem Düsenbalken (49) abgegebenen Transportwasserstrahl anspritzbar ist.

26. Vorrichtung nach einem der Ansprüche 1 bis 25,
**dadurch gekennzeichnet,**
**dass** ein Leitkanal vorgesehen ist, über den die Späne von der Brammenoberseite unmittelbar hinter dem Frässpalt angesaugt werden, wobei die Späne in einem Rohr quer zur Förderrichtung (F) weggefördert werden.

27. Vorrichtung nach einem der Ansprüche 1 bis 26,
**dadurch gekennzeichnet,**
**dass** mindestens ein Magnet angeordnet ist, mit dem die Späne bei ihrer Wegförderung beeinflusst werden können.

## Claims

1. Device for producing a metal strip (1) by continuous casting, comprising a casting machine (2), in which a slab (3) is cast, wherein arranged behind the casting machine (2) in conveying direction (F) of the slab (3) is at least one milling machine (4) in which at least one surface of the slab (3) can be milled down,
**characterised in that**
arranged in the region of at least one miller (5) of the milling machine (4) is a swarf conveyor device (5) which conveys the milled-off swarf (7) away from the region of the miller (5) upwardly and/or in a direction (Q) transversely to the conveying direction (F) of the slab (3),
wherein the swarf conveyor device (6) comprises at least one conveyor worm, which is arranged in the region of the surface (8) of the slab (3) and the longitudinal axis of which extends transversely to the conveying direction (F), or
wherein the swarf conveyor device (6) comprises at least one conveyor belt (9), which runs in the region of the surface (8) of the slab (3) transversely to the conveying direction (F).

2. Device according to claim 1, **characterised in that** the conveyor belt (9) runs horizontally in the region of the surface (8) of the slab (3).

3. Device according to claim 1 or 2, **characterised in that** the conveyor belt (9) is formed as an endless belt and completely encloses the slab (3) as considered in conveying direction (F).

4. Device according to claim 3, **characterised in that** the conveyor belt (9) is deflected over a number of deflecting rollers (10), of which at least one is driven.

5. Device according to any one of claims 1 to 4, **characterised in that** the conveyor belt (9) is provided with or connected with cooling means (11) by which it can be cooled.

6. Device according to claim 5, **characterised in that** the cooling means (11) are constructed as spray nozzles which can spray coolant onto the conveyor belt (9).

7. Device according to any one of claims 1 to 6, **characterised in that** a baffle plate (12) is arranged in front of or behind the swarf conveyor device (6) in conveying direction (F).

8. Device according to claim 7, **characterised in that** the baffle plate (12) is provided with a number of guide platelets (13) which face the miller (5).

9. Device according to any one of claims 1 to 8, **characterised in that** the swarf conveyor device (6) is arranged at movement means (14) by which it is raisable and lowerable and/or pivotable in vertical direction.

10. Device according to any one of claims 1 to 9, **characterised in that** a guide element (15') is arranged, by which the swarf (7) can be guided from the surface (8) of the slab (3) to the swarf conveyor device (6).

11. Device according to claim 10, **characterised in that** guide element (15') has an edge (16) of heat-resistant material, which can be placed against the surface (8) of the slab (3).

12. Device according to claim 10 or 11, **characterised in that** the guide element (15') is mounted to be pivotable about a horizontal axis (17) transversely to the conveying direction (F) of the slab (3).

13. Device according to any one of claims 10 to 12, **characterised in that** the guide element (15') is provided with or connected with cooling means (19) by which it can be cooled.

14. Device according to claim 13, **characterised in that** the cooling means (19) are constructed as spray nozzles which can spray a coolant onto the guide element (15').

15. Device according to any one of claims 1 to 14, **characterised in that** high-pressure water or compressed-air nozzles (27, 49) are additionally arranged, which assist the transport of swarf.

16. Device according to claim 15, **characterised in that** the high-pressure water or compressed-air nozzles (27, 49) convey swarf onto the conveyor belt (9) or to the guide element (15') or to a receiving element (54) of worm-shaped construction.

17. Device according to any one of claims 1 to 16, **characterised in that** roller side guides (30) for accepting axial forces acting on the miller (5) are provided.

18. Device according to any one of claims 1 to 17, **characterised in that** at least the miller (5) coming into use for the swarf upper side is a face miller (36).

19. Device according to claim 18, **characterised in that** a plurality of face millers (36), which are arranged with an overlap as considered in conveying direction (F), are provided.

20. Device according to claim 18 or 19, **characterised in that** the face miller (36) comprises a plurality of cutters (37) which are coolable by cutter cooling means (39).

21. Device according to any one of claims 1 to 20, **characterised in that** a transfer table (40), which is constructed for support of the slab (3) in the region of the miller or millers (5), is provided.

22. Device according to claim 21, **characterised in that** the transfer table (40) is constructed to be internally cooled.

23. Device according to any one of claims 1 to 22, **characterised in that** the swarf conveyor device (6) is formed as a receiving element (54) of worm-shaped construction.

24. Device according to claim 23, **characterised in that** a guide element (15), which is constructed for conveying swarf from the slab upper side into the receiving element (54) of worm-shaped construction, is provided.

25. Device according to claim 23 or 24, **characterised in that** a deflecting plate (52) is provided, wherein the deflecting plate (52) can be subject to incident spraying by a transport water jet delivered by a nozzle bar (49).

26. Device according to any one of claims 1 to 25, **characterised in that** a guide channel, by way of which the swarf can be sucked from the slab upper side directly behind the milling gap, is provided, wherein the swarf is conducted away in a pipe transversely to the conveying direction (F).

27. Device according to any one of claims 1 to 26, **characterised in that** at least one magnet, by which the swarf can be influenced while it is being conveyed away, is arranged.

## Revendications

1. Dispositif pour produire une bande métallique (1) par coulée continue, comprenant une machine de coulée (2) dans laquelle une brame (3) est coulée, dans lequel, derrière la machine de coulée (2) en direction de convoyage (F) de la brame (3), est agencée au moins une machine de fraisage (4) dans laquelle il est possible de fraiser au moins une surface de la brame (3),
**caractérisé en ce que**
dans la région d'au moins une fraise (5) de la machine fraisage (4) est agencé un dispositif de convoyage de copeaux (6) qui convoie les copeaux fraisés (7) vers le haut et/ou en direction (Q) transversale à la direction de convoyage (F) de la brame (3) hors de la région de la fraise (5),
dans lequel le dispositif de convoyage de copeaux (6) comporte au moins une vis sans fin de convoyage, laquelle est agencée dans la région de la surface (8) de la brame (3) et dont l'axe longitudinal s'étend transversalement à la direction de convoyage (F), ou
dans lequel le dispositif de convoyage de copeaux (6) comprend au moins une bande de convoyage (9) qui s'étend dans la région de la surface (8) de la brame (3) transversalement à la direction de convoyage (F).

2. Dispositif selon la revendication 1,
**caractérisé en ce que** la bande de convoyage (9) s'étend horizontalement dans la région de la surface (8) de la brame (3).

3. Dispositif selon la revendication 1 ou 2,
**caractérisé en ce que** la bande de convoyage (9) est réalisée sous forme de bande sans fin, et entoure entièrement la brame (3), lorsqu'on l'observe en direction de convoyage (F).

4. Dispositif selon la revendication 3,
**caractérisé en ce que** la bande de convoyage (9) est guidée via un certain nombre de rouleaux de renvoi (10), parmi lesquels au moins un rouleau est entraîné.

5. Dispositif selon l'une des revendications 1 à 4,
**caractérisé en ce que** la bande de convoyage (9) est pourvue de moyens de refroidissement (11) ou est en liaison avec de tels moyens, avec lesquels elle peut être refroidie.

6. Dispositif selon la revendication 5,
**caractérisé en ce que** les moyens de refroidissement (11) sont réalisés sous forme de buses de pulvérisation qui peuvent pulvériser un agent de refroidissement sur la bande de convoyage (9).

7. Dispositif selon l'une des revendications 1 à 6,
**caractérisé en ce qu'**une plaque à impact (12) est agencée devant ou derrière le dispositif de convoyage de copeaux (6) en direction de convoyage (F).

8. Dispositif selon la revendication 7,
**caractérisé en ce que** la plaque à impact (12) est pourvue d'un certain nombre de lamelles de guidage (13) qui sont tournées vers la fraise (5).

9. Dispositif selon l'une des revendications 1 à 8,
**caractérisé en ce que** le dispositif de convoyage de copeaux (6) est agencée sur des moyens de déplacement (14), avec lesquels il peut être monté et descendu en direction verticale et/ou pivoté.

10. Dispositif selon l'une des revendications 1 à 9,
**caractérisé en ce qu'**il est prévu un élément de guidage (15'), au moyen duquel des copeaux (7) peuvent être amenés depuis la surface (9) de la brame (3) vers le dispositif de convoyage de copeaux (6).

11. Dispositif selon la revendication 10,
**caractérisé en ce que** l'élément de guidage (15') comporte une arête (16) en matériau réfractaire, laquelle peut être appliquée contre la surface (8) de la brame (3).

12. Dispositif selon la revendication 10 ou 11,
**caractérisé en ce que** l'élément de guidage (15') est monté avec possibilité de pivotement autour d'un axe horizontal (17) transversalement à la direction de convoyage (F) de la brame (3).

13. Dispositif selon l'une des revendications 10 à 12,
**caractérisé en ce que** l'élément de guidage (15') est pourvu de moyens de refroidissement (19) ou est en liaison avec de tels moyens, avec lesquels il peut être refroidi.

14. Dispositif selon la revendication 13,
**caractérisé en ce que** les moyens de refroidissement (19) sont réalisés sous forme de buses de pulvérisation, qui peuvent pulvériser un agent de refroidissement sur l'élément de guidage (15').

15. Dispositif selon l'une des revendications 1 à 14,
**caractérisé en ce qu'**il est prévu en outre des buses à eau sous haute pression ou des buses à air comprimé (27, 49), qui assistent le transport des copeaux.

16. Dispositif selon la revendication 15,
**caractérisé en ce que** les buses à eau sous haute pression ou les buses à air comprimé (27, 49) transportent les copeaux vers la bande de convoyage (9) ou vers l'élément de guidage (15'), ou encore vers un élément de réception (54) réalisé sous forme hélicoïdale.

17. Dispositif selon l'une des revendications 1 à 16,
**caractérisé en ce qu'**il est prévu des guidages latéraux à rouleaux (30) pour encaisser des forces axiales agissant sur la fraise (9).

18. Dispositif selon l'une des revendications 1 à 17,
**caractérisé en ce qu'**au moins la fraise (5) qui est employée pour la face supérieure de la brame est une fraise frontale (36).

19. Dispositif selon la revendication 18,
**caractérisé en ce qu'**il est prévu plusieurs fraises frontales (36) qui sont agencées en chevauchement lorsqu'on les observe en direction de convoyage (F).

20. Dispositif selon la revendication 18 ou 19,
**caractérisé en ce que** la fraise frontale (36) comporte un certain nombre de tranchants (37), qui peuvent être refroidis par un refroidissement de tranchants (39).

21. Dispositif selon l'une des revendications 1 à 20,
**caractérisé en ce qu'**il est prévu une table de transfert (40), qui est réalisée pour soutenir la brame (3) dans la région de la fraise ou des fraises (5).

22. Dispositif selon la revendication 21,
**caractérisé en ce que** la table de transfert (40) est réalisée avec refroidissement interne.

23. Dispositif selon l'une des revendications 1 à 22,
**caractérisé en ce que** le dispositif de convoyage de copeaux (6) est réalisé comme un élément récepteur (54) réalisé sous forme hélicoïdale.

24. Dispositif selon la revendication 23,
**caractérisé en ce qu'**il est prévu un élément de guidage (15) qui est réalisé pour convoyer des copeaux depuis la face supérieure de la brame jusque dans l'élément récepteur (54) réalisé sous forme hélicoïdale.

25. Dispositif selon la revendication 23 ou 24,
**caractérisé en ce qu'**il est prévu une plaque de renvoi (52), ladite plaque de renvoi (52) pouvant être aspergée par un jet d'eau de transport fourni depuis une barre à buses (49).

26. Dispositif selon l'une des revendications 1 à 25,
**caractérisé en ce qu'**il est prévu un canal de guidage au moyen duquel les copeaux peuvent être aspirés depuis la face supérieure de la brame directement derrière l'intervalle de fraisage, les copeaux étant convoyés en éloignement dans un tube transversalement à la direction de convoyage (F).

27. Dispositif selon l'une des revendications 1 à 26,
**caractérisé en ce qu'**il est prévu au moins un aimant, au moyen duquel les copeaux peuvent être influencés lors de leur convoyage en éloignement.
